# FASCICULE DE BREVET EUROPEEN

(11) **EP 3 033 525 B1**
(45) Date de publication et mention de la délivrance du brevet: **10.06.2020**
(21) Numéro de dépôt: 14749935.4
(22) Date de dépôt: 29.07.2014
(51) Int. Cl.: F04B 15/02, B01D 45/12, B04C 9/00, E03F 7/10, E02F 3/92, F04B 23/02, E21B 11/00, F04B 53/20

(54) **PROCÉDÉ ET UNITÉ DE POMPAGE DE PRODUITS INFLAMMABLES SUSCEPTIBLES DE FORMER UNE ATMOSPHERE EXPLOSIVE**
PUMPVERFAHREN UND -EINHEIT FÜR BRENNBARE PRODUKTE, WELCHE EINE EXPLOSIVE MISCHUNG ERZEUGEN KÖNNEN
PUMPING METHOD AND UNIT FOR FLAMABLE PRODUCTS CAPABLE OF FORMING AN EXPLOSIVE ATMOSPHERE

(30) Priorité: 14.08.2013 FR 1358002
(43) Date de publication de la demande: 22.06.2016
(73) Titulaire: ORTEC EXPANSION, 13799 Aix En Provence Cedex 3 (FR)
(72) Inventeur: RIVARD, Daniel, F-75007 Paris (FR)
(74) Mandataire: Gevers & Orès
(86) Numéro de dépôt international: PCT/FR2014/051963
(87) Numéro de publication internationale: WO 2015/022458

(56) Documents cités:
- EP-A1- 0 283 625
- EP-A1- 1 455 026
- EP-A1- 1 548 195
- DE-A1- 10 123 393
- US-A- 5 295 317
- US-A- 5 535 836

## Description

### 1. Domaine technique de l'invention

L'invention concerne un procédé et une unité de pompage de produits inflammables, liquides ou pâteux. En particulier, l'invention concerne un procédé et une unité de pompage d'hydrocarbures, d'acides, de bases, de boues d'épuration, de boues biologiques, de boues primaires et de manière générale de tous produits inflammables analogues susceptibles de produire une atmosphère explosive (plus connue sous l'acronyme ATEX). L'invention concerne en particulier les unités mobiles de pompage tels que les camions hydrocureurs destinés à vidanger des zones de stockage de boues ATEX.

### 2. Arrière-plan technologique

Dans tout le texte, les termes « produit inflammable » désignent indifféremment des hydrocarbures, des acides, des bases, des boues d'épuration, des boues biologiques, des boues primaires et de manière générale tous produits inflammables analogues susceptibles de former une atmosphère explosive. Ces produits inflammable peuvent aussi être toxiques.

Une «atmosphère explosive» est un mélange avec l'air, dans les conditions atmosphériques, de substances inflammables sous forme de gaz, vapeurs, brouillards ou poussières, dans lequel, après inflammation, la combustion se propage à l'ensemble du mélange non brûlé. En d'autres termes, une « atmosphère explosible » est une atmosphère susceptible de devenir explosive du fait de conditions locales particulières.

De nombreuses industries -chimie, pétrochimie, agroalimentaire, métallurgie, ...- génèrent des boues susceptibles de produire des atmosphères explosives. Il est donc nécessaire de pomper régulièrement ces boues pour pouvoir les transporter vers des sites spécialisés de traitement et/ou de stockage. De telles opérations de pompage sont également nécessaires pour purger les égouts industriels, pour récupérer les déchets produits par le nettoyage haute pression d'installations industrielles, pour extraire les boues des stations d'épuration, pour assécher les fonds de cuves de manière à permettre leur inspection ou leur maintenance, etc.

Ces opérations de pompage présentent de nombreux risques pour la sécurité et la santé des opérateurs qui sont liés à la nature explosive des produits pompés et à l'émission de gaz nocifs comme les composés organiques volatils (plus connus sous l'acronyme COV). En outre, la composition exacte des produits pompés n'est pas toujours maitrisée par l'industriel.

Il existe à ce jour trois techniques de pompage pour ce type de produits : le pompage sous vide, le pompage aéraulique et le pompage par pompes de transfert. Le document EP 0 283 625 A1 divulgue par example une installation de pompage sous vide d'un fluide chargé de particules.

Le pompage sous vide consiste à utiliser une pompe à vide pour vider la cuve contenant les produits à pomper, sans introduction d'air. Une enceinte de stockage est agencée entre la pompe et un tuyau d'aspiration immergé en permanence dans le produit à pomper. Cette technique présente les avantages de permettre un arrêt de fonctionnement de la pompe à vide durant l'opération de pompage, en maintenant une capacité d'aspiration tant que le différentiel par rapport à la pression atmosphérique existe. En outre, elle autorise l'installation de la pompe à des grandes distances du produit à pomper en raison de la force d'aspiration. Elle permet également d'éviter le contact du produit avec la pompe à l'exception des vapeurs ou des gaz et de limiter la quantité de polluants rejetée. En revanche, cette technique de pompage présente notamment les inconvénients de favoriser l'ébullition des produits volatils et la désorption des gaz, d'augmenter les risques d'explosion et l'émission de gaz nocifs comme les composés organiques volatils.

Le pompage aéraulique consiste à utiliser une pompe à vide pour vider la cuve contenant les produits à pomper, mais avec introduction d'air. L'ajout d'air peut être volontaire pour favoriser le transport du produit et augmenter le rendement du pompage ou involontaire lorsqu'en fin de pompage, le tuyau n'est plus suffisamment immergé dans le produit. Cette technique nécessite un fonctionnement permanent de la pompe et présente les avantages de pouvoir installer la pompe à des très grandes distances du produit à pomper en raison de la force d'aspiration, de pouvoir pomper des produits liquides comportant des corps étrangers solides (impossibilité avec une pompe volumétrique) et de pouvoir pomper des produits en nappe. Elle évite également le contact du produit avec la pompe à l'exception des vapeurs ou des gaz. En revanche, elle présente en plus des inconvénients du procédé de pompage sous vide, celui de rejeter à l'atmosphère des volumes de gaz très importants (débit de pompe élevé et pas d'arrêt de pompe possible durant l'opération de pompage) et donc d'émettre plus de polluants par l'évent de la pompe à vide favorisant encore les risques d'explosion.

Le pompage par transfert consiste à utiliser une pompe volumétrique qui aspire directement les produits. Cette technique présente les avantages de pouvoir pomper des produits très volatils, de limiter les rejets de polluants et de pomper des produits visqueux et pâteux. En revanche, cette technique, si elle est celle qui présente le moins de risque, est délaissée aujourd'hui car elle n'est pas compatible avec des débits de pompage importants et ne permet pas de vidanger totalement les cuves. La force d'aspiration limitée de ce type de pompe impose de la positionner à proximité du bac à vidanger.

Il existe donc un besoin de disposer d'une nouvelle technique de pompage permettant à la fois de sécuriser les opérations de pompage, mais tout en permettant un pompage rapide et une vidange totale des cuves.

### 3. Objectifs de l'invention

L'invention vise à pallier au moins certains des inconvénients des dispositifs et procédés de pompage connus.

En particulier, l'invention vise à fournir, dans au moins un mode de réalisation de l'invention, un dispositif et un procédé de pompage qui permettent de limiter la dangerosité et la toxicité d'une opération de pompage de produits inflammables susceptibles de former une atmosphère explosive tout en conservant des débits de pompage importants.

L'invention vise aussi à fournir, dans au moins un mode de réalisation, un dispositif et un procédé de pompage qui permettent de limiter le temps d'exposition au vide des produits pompés de manière à limiter les phénomènes de désorption des gaz dissous dans les produits.

L'invention vise aussi à fournir, dans au moins un mode de réalisation de l'invention, un dispositif et un procédé de pompage qui permettent de réduire la quantité d'air admise dans le circuit de pompage.

L'invention vise aussi à fournir, dans au moins un mode de réalisation de l'invention, un dispositif et un procédé de pompage qui permettent de réduire la surface exposée au vide.

L'invention vise aussi à fournir, dans au moins un mode de réalisation de l'invention, un dispositif et un procédé de pompage qui permettent de limiter les rejets de gaz nocifs.

L'invention vise aussi à fournir, dans au moins un mode de réalisation de l'invention, un dispositif et un procédé de pompage qui permettent de cantonner la zone dangereuse à la zone de pompage.

### 4. Exposé de l'invention

Pour ce faire, l'invention concerne une unité de pompage de produits inflammables susceptibles de former une atmosphère explosive d'une zone de pompage vers une enceinte de stockage,
Caractérisée en ce qu'elle comprend :
- un séparateur desdits produits en une phase liquide/pâteuse et une phase gazeuse, comprenant une cuve cyclonique, une bouche d'entrée des produits, une sortie de refoulement des produits non gazeux et un orifice d'aspiration, ledit séparateur étant adapté pour être agencé dans ladite zone de pompage,
- une pompe volumétrique de refoulement des produits non gazeux vers ladite enceinte de stockage, ladite pompe étant reliée à ladite sortie de refoulement des produits dudit séparateur de produits,
- des moyens de mise sous vide de ladite cuve cyclonique dudit séparateur de produits adaptés pour assurer l'aspiration des produits de ladite zone de pompage vers ledit séparateur sans mise sous vide de ladite enceinte de stockage,
- un circuit de rejet des gaz produits par ladite unité vers au moins une zone de rejet balisée.

Une unité selon l'invention permet donc de limiter le phénomène de désorption des produits pompés par la mise en œuvre de deux circuits, un circuit court d'aspiration sous vide et un circuit pression de refoulement des produits non gazeux. En particulier, le séparateur des produits est directement agencé dans la zone de pompage et le circuit sous vide d'aspiration vise uniquement à l'aspiration des produits de la zone de pompage jusque dans la cuve cyclonique du séparateur. Les termes « zone de pompage » désignent la cuve qui contient les produits à pomper et une certaine zone qui entoure cette cuve. Cette zone est définie par les différentes législations en matière de pompage de produit ATEX. En d'autres termes, il s'agit de la zone géographique qui contient et entoure les produits à pomper. Elle ne se limite donc pas uniquement à la cuve qui contient les produits à pomper mais également à son voisinage immédiat.

Le refoulement des produits du séparateur vers la zone de stockage est obtenu par la mise en œuvre d'un circuit pression comprenant une pompe volumétrique. Ce transfert de produit n'est donc pas obtenu par le recours à un circuit sous vide, ce qui limite le temps d'exposition des produits au vide, et donc la désorption des gaz, et donc les risques toxicologiques et d'explosion. En outre, l'enceinte de stockage des produits inflammables n'est pas mise sous vide, ce qui limite très fortement la désorption sur la durée totale de l'opération de pompage et donc les émissions de gaz nocifs et explosifs. Les risques d'explosion sont fortement diminués. Une unité de pompage selon l'invention permet donc de limiter fortement la dangerosité de l'opération de pompage tout en maintenant un bon débit de pompage et une capacité à assurer la vidange totale du réservoir à nettoyer.

En outre, le circuit sous vide étant court, la quantité d'air, qui fait office de comburant, admise dans le circuit sous vide pour assurer le transfert des produits inflammables de la zone de pompage jusqu'à l'enceinte de stockage, est réduite. Cela contribue également à limiter la dangerosité de l'opération de pompage.

Avantageusement et selon une première variante de l'invention, lesdits moyens de mise sous vide dudit séparateur comprennent une pompe à vide agencée à l'extérieur de ladite zone de pompage et de l'enceinte de stockage et reliée audit orifice d'aspiration dudit séparateur.

Selon cette variante de l'invention, le vide nécessaire pour assurer le transfert des produits inflammables de la zone de pompage jusqu'à la cuve du séparateur est obtenu par la mise en œuvre d'une pompe à vide qui est installée à l'extérieur à la fois de la zone de pompage et de l'enceinte de stockage.

Dans le cas où l'unité de pompage selon l'invention est installée sur un camion hydro-cureur, la pompe à vide du camion hydro-cureur peut faire office de pompe à vide de l'invention.

Cette pompe à vide est agencée de telle sorte que l'enceinte de stockage ne soit pas sur le circuit du vide en amont de la pompe à vide de telle sorte que l'enceinte puisse être à la pression atmosphérique.

Avantageusement et selon cette variante de l'invention, ledit circuit de rejet des gaz comprend une conduite de rejet des gaz produits par ledit séparateur et reliée audit orifice d'aspiration dudit séparateur, ladite pompe à vide étant agencée sur cette conduite, de sorte que cette conduite contribue à la fois à la mise sous vide de ladite cuve cyclonique et au transfert des gaz produits par le séparateur vers une zone de rejet balisée.

Le circuit de rejet de gaz assure le rejet des gaz produits par ladite unité vers au moins une zone de rejet balisée.

Selon une variante avantageuse, le circuit de rejet des gaz comprend également un clapet de sécurité ménagé dans l'enceinte de stockage et maintenu en position ouverte pour protéger l'enceinte contre des risques de surpression en la maintenant à la pression atmosphérique.

En combinaison, le circuit de rejet des gaz comprend une conduite de rejet des gaz issus de la désorption des produits dans l'enceinte de stockage agencé entre le clapet de sécurité et une zone de rejet balisée.

Avantageusement et selon une deuxième variante de l'invention, lesdits moyens de mise sous vide dudit séparateur de produits comprennent un hydro-injecteur monté sur ledit orifice d'aspiration dudit séparateur et alimenté en eau haute-pression depuis une réserve d'eau.

Selon cette deuxième variante, le vide est créé dans la cuve cyclonique du séparateur par la mise en œuvre d'un hydro-injecteur alimenté en eau haute-pression depuis une réserve en eau. Cet hydro-injecteur, alimenté en eau haute-pression, permet de créer un effet Venturi, conduisant à l'aspiration des produits de la zone de pompage jusqu'à la cuve cyclonique du séparateur.

Une unité de pompage selon cette deuxième variante est particulièrement intéressante car elle ne nécessite pas la mise en œuvre d'une pompe à vide. Seule une pompe en eau haute-pression est nécessaire pour assurer le pompage de produits inflammables.

En outre, selon cette deuxième variante, la zone dangereuse est exclusivement cantonnée à la zone de pompage déjà classée zone ATEX.

Dans le cas où l'unité de pompage selon cette deuxième variante de l'invention est installée sur un camion hydro-cureur, la réserve en eau haute-pression du camion peut faire office de réserve en eau pour l'hydro injecteur de l'unité selon l'invention et la pompe haute-pression du camion permet d'alimenter l'hydro-injecteur en eau haute-pression.

Avantageusement, une unité de pompage selon cette variante comprend un hydro-cyclone adapté pour dégazer l'eau haute-pression issue dudit hydro-injecteur.

L'hydro-cyclone permet de séparer les gaz de l'eau provenant de l'hydro-injecteur. En d'autres termes, selon cette variante, les produits inflammables sont séparés en une phase pâteuse/liquide et une phase gazeuse au niveau du séparateur de produits inflammables, la phase gazeuse étant ensuite absorbée par l'eau haute-pression de l'hydro-injecteur. L'eau est ensuite elle-même séparée en une phase liquide et une phase gazeuse au niveau de l'hydro-cyclone. Cette phase gazeuse obtenue par l'hydro-cyclone est sensiblement identique à la phase gazeuse issue du séparateur et transportée par l'eau haute-pression.

Avantageusement, une unité de pompage selon cette variante comprend une pompe volumétrique de refoulement de l'eau dégazée vers ladite réserve en eau.

Selon cette variante, l'unité comprend deux pompes volumétriques, une pompe de refoulement de la phase pâteuse/liquide des produits pompés à la sortie du séparateur, et une pompe de refoulement de l'eau dégazée par l'hydro-cyclone.

Avantageusement et selon cette variante de l'invention, ledit circuit de rejet des gaz comprend une conduite de rejet des gaz produits par ledit hydro-cyclone vers une zone de rejet balisée.

Le circuit de rejet de gaz assure le rejet des gaz produits par ladite unité vers au moins une zone de rejet balisée.

Selon une variante avantageuse, le circuit de rejet des gaz comprend également un clapet de sécurité ménagé dans l'enceinte de stockage et maintenu en position ouverte pour protéger l'enceinte contre des risques de surpression en la maintenant à la pression atmosphérique.

En combinaison, le circuit de rejet des gaz comprend une conduite de rejet des gaz issus de la désorption des produits dans l'enceinte de stockage agencé entre le clapet de sécurité et une zone de rejet balisée.

La conduite de rejet des gaz produits par ledit hydro-cyclone présente une sortie localisée sur la zone de rejet balisée de la cuve à vidanger. L'enceinte de stockage n'émet plus qu'un rejet de gaz insignifiant à l'atmosphère.

Avantageusement et selon l'invention, ladite enceinte de stockage est agencée à une distance de 50 à 100 mètres de la zone de pompage.

Une unité de pompage selon l'invention permet de pomper un produit inflammable sur une grande distance, de l'ordre de 50 à 100 mètres. Dans le cas de l'utilisation d'un camion hydro-cureur, l'opérateur peut donc installer l'unité de pompage, en particulier le séparateur dans la zone de pompage et rejoindre le camion hydro-cureur qui porte l'enceinte de stockage. Dès lors, l'équipement situé à plus de 50 mètres de la zone dangereuse, ne constitue plus une nouvelle zone ATEX. Les risques d'accident se réduisent -notamment par une diminution de la distance du circuit sous vide- et la sécurité apportée aux opérateurs est améliorée en leur permettant de piloter le pompage à grande distance de la zone de pompage.

Avantageusement et selon l'invention, ladite pompe volumétrique de refoulement des produits est une pompe pneumatique actionnée par air comprimé.

Selon une autre variante, cette pompe volumétrique peut être une pompe actionnée par une énergie hydraulique.

Avantageusement, une unité de pompage selon l'invention est portée par un combiné hydro-cureur.

L'invention concerne également un procédé de pompage de produits inflammables susceptibles de produire une atmosphère explosive d'une zone de pompage vers une enceinte de stockage,
caractérisé en ce qu'il comprend les étapes consistant à :
- séparer les produits directement dans ladite zone de pompage par le biais d'un séparateur de produits en une phase liquide/pâteuse et une phase gazeuse,
- mettre sous vide ledit séparateur de produits pour assurer l'aspiration des produits de ladite zone de pompage vers ledit séparateur sans mise sous vide de l'enceinte de stockage,
- refouler les produits non gazeux du séparateur vers ladite enceinte de stockage par le biais d'une pompe de refoulement volumétrique,
- conduire les gaz produits vers une zone de rejet balisée.

Le procédé selon l'invention est avantageusement mis en œuvre par une unité de pompage selon l'invention et une unité de pompage selon l'invention met avantageusement en œuvre un procédé selon l'invention.

Avantageusement et selon une première variante de l'invention, l'étape de mise sous vide du séparateur consiste à relier une pompe à vide au séparateur, ladite pompe étant agencée à l'extérieur de la zone de pompage et de l'enceinte stockage.

Avantageusement et selon une deuxième variante de l'invention, l'étape de mise sous vide dudit séparateur consiste à injecter de l'eau haute-pression dans un hydro-injecteur monté sur ledit séparateur depuis une réserve d'eau.

Avantageusement, un procédé selon cette deuxième variante comprend une étape d'alimentation d'un hydro-cyclone par l'eau haute-pression dégazée et une étape de refoulement de cette eau vers une réserve d'eau.

L'invention concerne également une unité de pompage et un procédé de pompage caractérisés en combinaison par tout ou partie des caractéristiques mentionnées ci-dessus ou ci-après.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique d'une unité de pompage connue de l'art antérieur,
- la figure 2 est une vue schématique d'une unité de pompage selon un premier mode de réalisation de l'invention,
- la figure 3 est une vue schématique d'une unité de pompage selon un deuxième mode de réalisation de l'invention,
- la figure 4 est une vue schématique d'une unité de pompage selon un mode de réalisation de l'invention montée sur un camion hydro-cureur,
- la figure 5 est une vue schématique en perspective d'un séparateur de produits inflammables d'une unité de pompage selon un mode de réalisation de l'invention,
- la figure 6 est une vue schématique d'un procédé de pompage selon un mode de réalisation de l'invention.

### 6. Description détaillée de modes de réalisation de l'invention

Sur la figure, les échelles et les proportions ne sont pas strictement respectées et ce, à des fins d'illustration et de clarté.

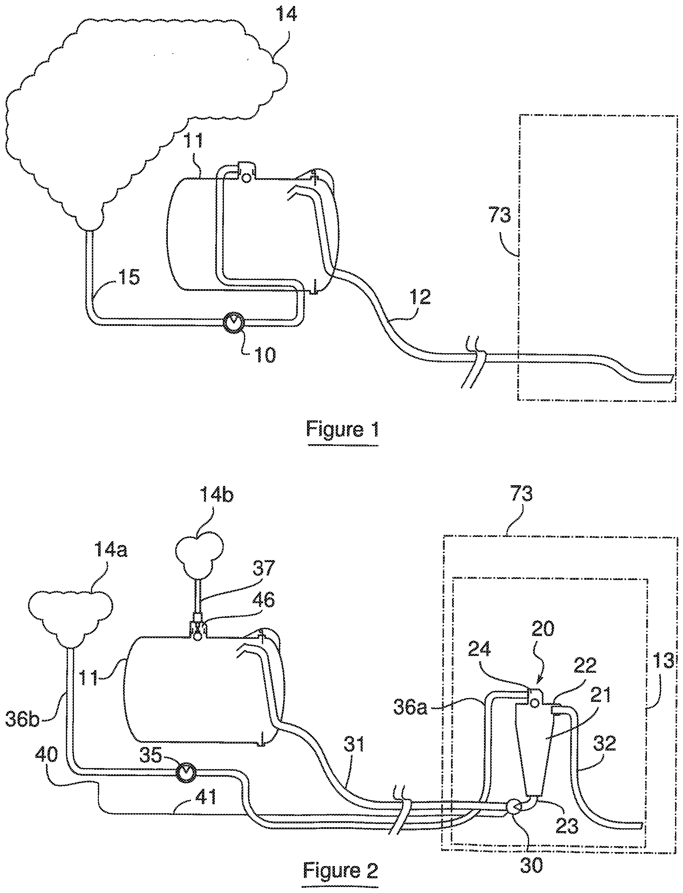

Pour le pompage de boues, d'hydrocarbures, d'acides, et de manière générale de tous produits inflammables susceptibles de former une atmosphère explosive, il est connu de mettre en œuvre une unité de pompage telle que représentée sur la figure 1. Cette unité de pompage comprend une pompe 10 à vide destinée à faire le vide dans une enceinte 11 de stockage. Cette enceinte 11 de stockage est reliée à une zone 73 de pompage par l'intermédiaire d'une conduite 12 de transfert des produits pompés. L'aspiration des produits inflammables se fait donc par la mise sous vide de l'enceinte 11 de stockage et les gaz issus de la désorption des produits sont rejetés vers une zone 14 de rejet balisée agencée à l'extrémité d'une conduite 15 de rejet des gaz, elle-même agencée entre cette zone 14 de rejet et l'enceinte 11 de stockage. Cette zone de rejet 14 de gaz nocifs à l'air libre est conséquente pour une unité de pompage de l'art antérieur.

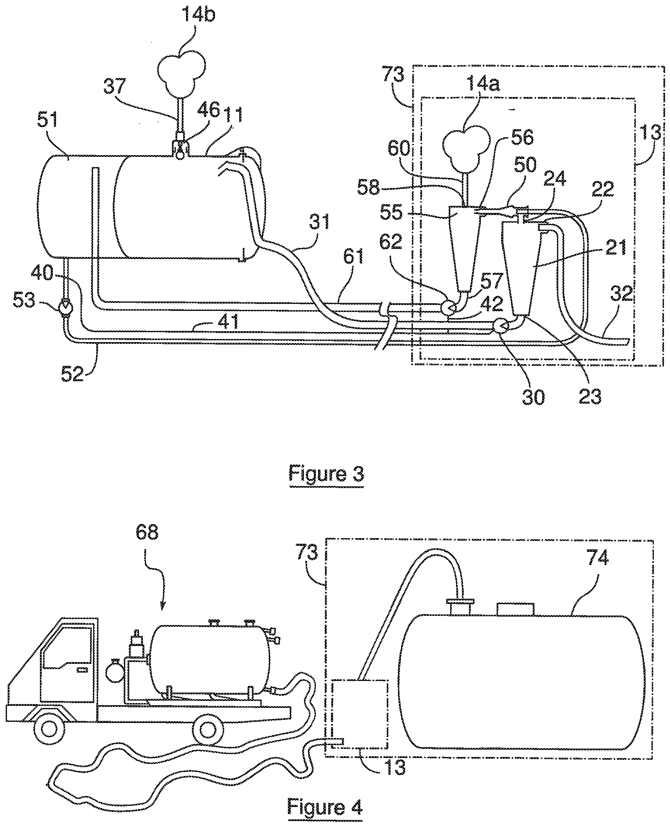

Selon l'invention, et tel que représenté sur les figures 2 et 3, l'unité de pompage de produits inflammables susceptibles de former une atmosphère explosive d'une zone 73 de pompage vers une enceinte 11 de stockage comprend un séparateur 20 des produits en une phase liquide/pâteuse et une phase gazeuse.

La zone 73 de pompage comprend un ensemble 13 qui est décrit dans la suite et une cuve de produits à pomper, non représentée sur les figures 2 et 3 à des fins de clarté. La cuve 74 qui comprend les produits à pomper et l'ensemble 13, qui forment la zone 73 de pompage, est représentée sur la figure 4.

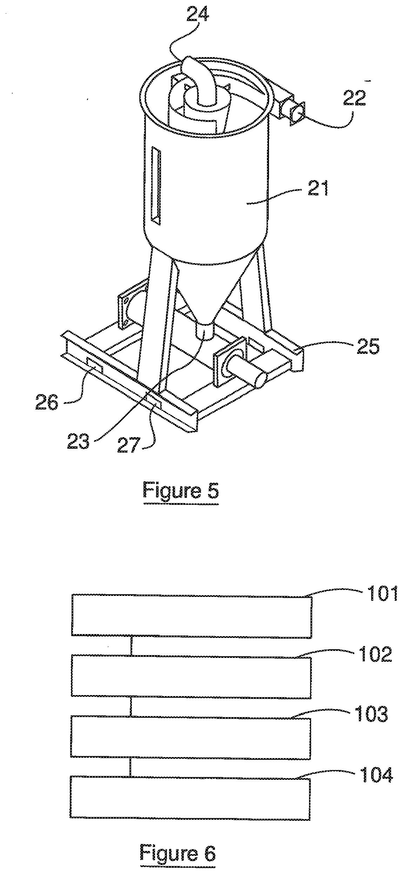

Le séparateur 20 des produits comprend une cuve 21 cyclonique, une bouche 22 d'entrée des produits, une sortie 23 de refoulement des produits non gazeux et un orifice 24 d'aspiration. La figure 5 présente un mode de réalisation de ce séparateur 20 des produits.

Selon un mode de réalisation avantageux, la cuve 21 cyclonique est de capacité réduite, de l'ordre de 200 à 300 litres. Cela permet de disposer d'un séparateur de dimensions réduites et de poids compatibles avec une opération de manœuvre par un opérateur. En outre, il contribue à permettre un bon débit d'aspiration tout en limitant les risques d'explosion. Le séparateur est par exemple adapté pour être monté sur une palette (plus connue sous la dénomination anglaise *skid*)*.* Le séparateur selon le mode de réalisation de la figure 5 comprend une base 25 formant une palette de manutention. Cette base 25 présente des ouvertures 26, 27 adaptées pour permettre le passage des fourches d'un chariot élévateur. Un tel séparateur est donc aisément manœuvrable par un opérateur et peut être agencé directement dans la zone de pompage, à proximité de la cuve contenant les produits à pomper.

L'unité de pompage selon l'invention comprend en outre une pompe 30 volumétrique de refoulement des produits non gazeux séparés par le séparateur 20, vers l'enceinte 11 de stockage. Cette pompe 30 volumétrique est reliée à la sortie 23 de refoulement des produits du séparateur 20. Une conduite 31 relie la pompe 30 volumétrique à l'enceinte 11 de stockage. Cette conduite est par exemple un tuyau souple résistant. Selon un mode de réalisation avantageux et tel que représenté sur les figures, cette pompe 30 volumétrique est une pompe à entrainement pneumatique ou hydraulique. Ainsi, une source 40 d'air comprimé ou d'huile hydraulique sous pression alimente la pompe 30 volumétrique par l'intermédiaire d'une conduite 41.

L'unité de pompage selon l'invention comprend en outre des moyens de mise sous vide de la cuve 21 cyclonique du séparateur 20 de produits adaptés pour assurer l'aspiration des produits de la zone 73 de pompage vers la cuve 21 du séparateur 20.

Selon un premier mode de réalisation et tel que représenté sur la figure 2, les moyens de mise sous vide du séparateur 20 comprennent une pompe 35 à vide. Cette pompe 35 est reliée à l'orifice 24 d'aspiration du séparateur 20. Cette pompe 35 à vide peut être de toute sorte connu. Elle est agencée à l'extérieur de la zone 73 de pompage et de l'enceinte 11 de stockage. Dans le cas où l'unité de pompage est montée sur un camion hydro-cureur, la pompe à vide du camion peut faire office de pompe 35 à vide de l'unité de pompage.

Une conduite 36a relie l'orifice 24 d'aspiration à la pompe 35 à vide et une conduite 36b relie la pompe 35 à vide à une zone 14a de rejet balisée. Ainsi, lorsque la pompe 35 à vide est actionnée, le vide se créé à l'intérieur de la cuve 21 cyclonique, ce qui génère un phénomène d'aspiration des produits de la zone de pompage dans la cuve 21 cyclonique par l'intermédiaire d'un tuyau 32 agencé entre la bouche 22 d'entrée de produits dans le séparateur 20 et la zone 73 de pompage. Les produits sont séparés par le séparateur 20 en une phase liquide/pâteuse et une phase gazeuse. La phase gazeuse des produits est aspirée par l'effet de la pompe 35 à vide vers la zone 14a de rejet balisée par l'intermédiaire des conduites 36a et 36b. La quantité de gaz rejetés dans cette zone 14a est bien moins importante que celle rejetée par une unité de pompage de l'art antérieur. La phase liquide/pâteuse est refoulée par l'effet de la pompe 30 volumétrique précédemment décrite vers l'enceinte 11 de stockage.

Une conduite 37 relie en outre l'enceinte 11 de stockage à la zone 14b de rejet balisée. Cette conduite permet de rejeter les gaz présents dans l'enceinte 11 de stockage et issus de la désorption des produits dans cette enceinte 11. Les gaz sont rejetés par l'intermédiaire d'un clapet 46 de sécurité ménagé sur la paroi supérieure de l'enceinte 11 de stockage. Ce clapet 46 est maintenu en position ouverte pour protéger l'enceinte 11 de stockage contre les risques de surpression de l'enceinte en maintenant l'enceinte à la pression atmosphérique. Selon un autre mode de réalisation, le rejet des gaz se fait directement par le biais du clapet 46 de sécurité, sans conduite 37.

La quantité de gaz rejetés dans la zone 14b par une unité selon ce mode de réalisation est bien moins importante que celle rejetée par une unité de pompage de l'art antérieur.

Selon le mode de réalisation de la figure 2, les conduites 36a, 36b et 37 forment le circuit de rejet de gaz de l'unité de pompage.

Selon un deuxième mode de réalisation et tel que représenté sur la figure 3, les moyens de mise sous vide du séparateur 20 comprennent un hydro-injecteur 50 monté sur l'orifice 24 d'aspiration du séparateur 20. L'hydro-injecteur 50 est alimenté en eau haute-pression depuis une réserve 51 en eau par l'intermédiaire d'un tuyau 52 reliant la réserve 51 d'eau à l'hydro-injecteur 50. Une pompe 53 à eau est montée sur le tuyau 52 pour pomper l'eau de la réserve 51 d'eau et la conduire sous haute-pression vers l'hydro-injecteur. L'eau haute-pression injectée dans l'hydro-injecteur permet de créer un effet Venturi, conduisant à l'aspiration des produits de la zone 73 de pompage jusqu'à la cuve 21 cyclonique du séparateur 20. Le principe du refoulement de la phase liquide/pâteuse des produits séparés par le séparateur 20 vers l'enceinte 11 de stockage est identique à celui décrit en lien avec le premier mode de réalisation de la figure 2. Il n'est donc pas décrit à nouveau pour la figure 3.

Selon le mode de réalisation de la figure 3, la sortie de l'hydro-injecteur 50 débouche dans un hydro-cyclone 55 adapté pour dégazer l'eau haute-pression. En effet, cette eau contient au moins en partie la phase gazeuse des produits séparés par le séparateur 20. L'hydro-cyclone 55 comprend une bouche 56 d'entrée de l'eau haute-pression couplée à la sortie de l'hydro-injecteur, une sortie 57 de refoulement des eaux vers la réserve 51 d'eau et un orifice 58 d'expiration des vapeurs.

L'orifice 58 d'expiration des vapeurs est relié à la zone 14a de rejet balisée par l'intermédiaire d'une conduite 60. Ce rejet de gaz a donc lieu directement dans la zone 73 de pompage. Ce mode de réalisation est donc particulièrement sécuritaire car la majorité des rejets de gaz nocifs a directement lieu dans la zone ATEX de pompage.

La sortie 57 de refoulement des eaux est reliée à la réserve en eau par l'intermédiaire d'une conduite 61 et d'une pompe 62 volumétrique agencée sur cette conduite 61. Ainsi, l'eau dégazée par l'hydro-cyclone 55 est refoulée vers la réserve 51 en eau.

Selon un mode de réalisation avantageux et tel que représenté sur la figure 3, la pompe 62 volumétrique de refoulement des eaux vers la réserve 51 en eau est une pompe pneumatique. Ainsi, la source 40 d'air comprimé qui alimente la pompe 30 volumétrique alimente également la pompe 62 volumétrique par l'intermédiaire de la conduite 41 d'air et d'une conduite 42 d'air secondaire qui dérive de la conduite 41 d'air vers la pompe 62 volumétrique. Selon d'autres modes de réalisation, une source d'air peut être prévue pour chaque pompe volumétrique et/ou des conduites indépendantes peuvent être utilisées pour permettre l'actionnement des différentes pompes volumétriques. Selon un autre mode de réalisation, la pompe 62 est une pompe à membranes.

A l'instar de ce qui a été décrit en lien avec la figure 2, dans le mode de réalisation de la figure 3, une conduite 37 relie l'enceinte 11 de stockage à la zone 14b de rejet balisée et permet de rejeter les gaz présents dans l'enceinte 11 de stockage et issus de la désorption des produits dans cette enceinte 11. Selon un autre mode de réalisation, le rejet des gaz se fait directement par le biais du clapet 46 de sécurité, sans conduite 37.

Selon le mode de réalisation de la figure 3, la conduite 60 constitue le point de rejet de gaz de l'unité de pompage. Il est contenu dans la zone ATEX de la cuve à vidanger. La conduite 37 représente la mise à la pression atmosphérique de la cuve de collecte.

La figure 4 est une vue schématique d'un camion 68 hydro-cureur mettant en œuvre une unité de pompage selon l'invention. Un tel camion est également désigné par le terme de combiné. Un tel camion 68 hydro-cureur est destiné à pomper des boues, des hydrocarbures ou tout type de produits inflammables susceptibles de former une atmosphère explosive, contenus dans une cuve 74. La zone 73 de pompage comprend la cuve 74 et un voisinage immédiat de cette cuve 74. L'ensemble 13 agencé au voisinage de la cuve 74, dans la zone 73 de pompage, comprend le séparateur 20 et des moyens de mise sous vide de ce séparateur. Il s'agit donc soit de l'ensemble 13 selon le premier mode de réalisation de l'invention tel que représenté sur la figure 2, soit l'ensemble 13 selon le deuxième mode de réalisation tel que représenté sur la figure 3.

Il existe à l'heure actuelle des camions hydro-cureurs destinés à pomper des produits inflammables par la mise sous vide de l'enceinte 11 de stockage. Un tel camion comprend en général une pompe à vide, une réserve d'eau et des moyens de fourniture d'air haute-pression. Un tel camion peut donc utilement concourir à mettre en œuvre l'invention. En particulier, pour la mise en œuvre du mode de réalisation de la figure 2 dans lequel les moyens de mise sous vide de la cuve cyclonique du séparateur comprennent une pompe à vide, la pompe du camion peut faire office de pompe à vide de l'unité de pompage selon l'invention. Pour la mise en œuvre du mode de réalisation de la figure 3 dans lequel les moyens de mise sous vide de la cuve cyclonique du séparateur comprennent un hydro-injecteur, la réserve d'eau fait office de réserve d'eau pour injecter l'eau haute-pression dans l'injecteur. Dans ce mode de réalisation, la pompe à vide du camion est inutilisée.

De plus, un camion de l'art antérieur comprend en général un clapet de sécurité « niveau haut de cuve » destiné à protéger la pompe à vide du camion. Ce clapet peut utilement faire office de clapet 46 bloqué en position ouverte pour protéger la cuve contre les surpressions.

L'invention concerne également un procédé de pompage de produits inflammables susceptibles de former une atmosphère explosive d'une zone de pompage vers une enceinte de stockage.

La figure 6 est une vue schématique des différentes étapes que comprend l'invention.

La première étape 101 consiste à séparer les produits directement dans la zone de pompage par le recours à un séparateur 20 de produits en une phase liquide/pâteuse et une phase gazeuse. Cette première étape est avantageusement mise en œuvre par un séparateur 20 d'une unité de pompage selon l'invention.

La seconde étape 102 consiste à mettre sous vide le séparateur 20 de produits pour assurer l'aspiration des produits de la zone 13 de pompage vers le séparateur 20. Cette deuxième étape est avantageusement mise en œuvre par une unité de pompage selon l'un des modes de réalisation de la figure 2 ou de la figure 3.

La troisième étape 103 consiste à refouler les produits non gazeux du séparateur 20 vers l'enceinte 11 de stockage par le biais d'une pompe 30 de refoulement volumétrique. Cette troisième étape est avantageusement mise en œuvre par une unité de pompage selon l'un des modes de réalisation de la figure 2 ou de la figure 3.

La quatrième étape 104 consiste à conduire les gaz produits vers une zone 14a, 14b de rejet balisée. Cette quatrième étape est avantageusement mise en œuvre par un circuit de rejet d'une unité de pompage selon l'un des modes de réalisation de la figure 2 ou de la figure 3.

L'invention ne se limite pas aux seuls modes de réalisation décrits. En particulier, d'autres types d'architectures des circuits d'aspiration sous vide et de pression sont possibles, sans sortir du principe à la base de l'invention qui est de ne plus mettre l'enceinte de stockage directement sous vide.

## Revendications

1. Unité de pompage de produits inflammables susceptibles de former une atmosphère explosive d'une zone (73) de pompage vers une enceinte (11) de stockage,
**caractérisée en ce qu'**elle comprend :
- un séparateur (20) desdits produits en une phase liquide/pâteuse et une phase gazeuse, comprenant une cuve (21) cyclonique, une bouche (22) d'entrée des produits, une sortie (23) de refoulement des produits non gazeux et un orifice (24) d'aspiration, ledit séparateur (20) étant adapté pour être agencé dans ladite zone (73) de pompage,
- une pompe (30) volumétrique de refoulement des produits non gazeux vers ladite enceinte (11) de stockage, ladite pompe (30) étant reliée à ladite sortie (23) de refoulement des produits dudit séparateur (20) de produits,
- des moyens de mise sous vide de ladite cuve (21) cyclonique dudit séparateur (20) de produits adaptés pour assurer l'aspiration des produits de ladite zone (73) de pompage vers ledit séparateur (20) sans mise sous vide de ladite enceinte (11) de stockage,
- un circuit de rejet des gaz produits par ladite unité vers au moins une zone (14a) de rejet balisée.

2. Unité selon la revendication 1, **caractérisée en ce que** lesdits moyens de mise sous vide dudit séparateur (20) comprennent une pompe (35) à vide agencée à l'extérieur de ladite zone (73) de pompage et de l'enceinte (11) de stockage et reliée audit orifice (24) d'aspiration dudit séparateur (20).

3. Unité selon la revendication 2, **caractérisée en ce que** ledit circuit de rejet des gaz comprend une conduite (36a, 36b) de rejet des gaz produits par ledit séparateur (20) et reliée audit orifice (24) d'aspiration dudit séparateur (20), ladite pompe (35) à vide étant agencée sur cette conduite (36a, 36b), de sorte que cette conduite (36a, 36b) contribue à la fois à la mise sous vide de ladite cuve (21) cyclonique et au transfert des gaz produits par le séparateur (20) vers une zone (14a) de rejet balisée,

4. Unité selon la revendication 1, **caractérisée en ce que** lesdits moyens de mise sous vide dudit séparateur (20) de produits comprennent un hydro-injecteur (50) monté sur ledit orifice (24) d'aspiration dudit séparateur (20) et alimenté en eau haute-pression depuis une réserve (51) d'eau.

5. Unité selon la revendication 4, **caractérisée en ce qu'**elle comprend un hydro-cyclone (55) adapté pour dégazer l'eau haute-pression issue dudit hydro-injecteur (50).

6. Unité selon la revendication 5, **caractérisée en ce qu'**elle comprend une pompe (62) volumétrique de refoulement de l'eau dégazée vers ladite réserve (51) en eau.

7. Unité selon l'une des revendications 5 ou 6, **caractérisée en ce que** ledit circuit de rejet des gaz comprend une conduite (60) de rejet des gaz produits par ledit hydro-cyclone (55) vers une zone (14a) de rejet balisée.

8. Unité selon l'une des revendications 1 à 7, **caractérisée en ce qu'**elle comprend un clapet (46) de sécurité ménagé dans ladite enceinte (11) de stockage et maintenu en position ouverte pour protéger l'enceinte (11) contre des risques de surpression.

9. Unité selon l'une des revendications 1 à 8, **caractérisée en ce que** ladite enceinte (11) de stockage est agencée à une distance de 50 à 100 mètres de la zone (73) de pompage.

10. Unité selon l'une des revendications 1 à 9, **caractérisée en ce qu'**elle est portée par un combiné (68) hydro-cureur.

11. Procédé de pompage de produits inflammables susceptibles de former une atmosphère explosive d'une zone de pompage vers une enceinte de stockage, **caractérisé en ce qu'**il comprend les étapes consistant à :
- (101) séparer les produits directement dans ladite zone de pompage par le biais d'un séparateur de produits en une phase liquide/pâteuse et une phase gazeuse,
- (102) mettre sous vide ledit séparateur de produits pour assurer l'aspiration des produits de ladite zone de pompage vers ledit séparateur, sans mise sous vide de ladite enceinte de stockage,
- (103) refouler les produits non gazeux du séparateur vers ladite enceinte de stockage par le biais d'une pompe de refoulement volumétrique,
- (104) conduire les gaz produits vers une zone de rejet balisée.

12. Procédé de pompage selon la revendication 11, **caractérisé en ce que** l'étape (102) de mise sous vide du séparateur consiste à relier une pompe à vide au séparateur, ladite pompe étant agencée à l'extérieur de la zone de pompage et de l'enceinte stockage.

13. Procédé selon la revendication 11, **caractérisé en ce que** l'étape (102) de mise sous vide dudit séparateur consiste à injecter de l'eau haute-pression dans un hydro-injecteur monté sur ledit séparateur depuis une réserve d'eau.

14. Procédé selon la revendication 13, **caractérisé en ce qu'**il comprend une étape d'alimentation d'un hydro-cyclone par l'eau haute-pression dégazée et une étape de refoulement de cette eau vers ladite une réserve d'eau.

## Patentansprüche

1. Einheit zum Pumpen von brennbaren Produkten, welche eine explosive Atmosphäre bilden können, von einer Pumpzone (73) zu einem Speicherbehälter (11),
**dadurch gekennzeichnet, dass** sie umfasst:
- einen Produktabscheider (20) der Produkte in eine flüssige/pastöse Phase und eine gasförmige Phase, einen Zyklonbehälter (21), einen Produkteinlass (22), einen Förderauslass (23) für die nicht gasförmigen Produkte und eine Ansaugöffnung (24) umfassend, wobei der Abscheider (20) angepasst ist, um in der Pumpzone (73) angeordnet zu werden,
- eine Verdrängerpumpe (30) zum Fördern der nicht gasförmigen Produkte zu dem Speicherbehälter (11), wobei die Pumpe (30) mit dem Produktförderauslass (23) des Produktabscheiders (20) verbunden ist,
- Mittel zum Evakuieren des Zyklonbehälters (21) des Produktabscheiders (20), die geeignet sind, das Ansaugen der Produkte aus der Pumpzone (73) in Richtung des Abscheiders (20) zu gewährleisten, ohne den Speicherbehälter (11) zu evakuieren,
- einen Kreis zum Abführen der von der Einheit erzeugten Gase zu mindestens einer markierten Abführzone (14a).

2. Einheit nach Anspruch 1, **dadurch gekennzeichnet, dass** die Mittel zum Evakuieren des Abscheiders (20) eine Vakuumpumpe (35) umfassen, die außerhalb der Pumpzone (73) und des Speicherbehälters (11) angeordnet und mit der Ansaugöffnung (24) des Abscheiders (20) verbunden ist.

3. Einheit nach Anspruch 2, **dadurch gekennzeichnet, dass** der Kreis zum Abführen der Gase eine Leitung (36a, 36b) zum Abführen der von dem Abscheider (20) erzeugten Gase umfasst, die mit der Ansaugöffnung (24) des Abscheiders (20) verbunden ist, wobei die Vakuumpumpe (35) an dieser Leitung (36a, 36b) so angeordnet ist, dass diese Leitung (36a, 36b) sowohl zum Evakuieren des Zyklonbehälters (21) als auch zum Weiterleiten der von dem Abscheider (20) erzeugten Gase zu einer markierten Abführzone (14a) beiträgt.

4. Einheit nach Anspruch 1, **dadurch gekennzeichnet, dass** die Mittel zum Evakuieren des Produktabscheiders (20) einen Hydroinjektor (50) umfassen, der an der Ansaugöffnung (24) des Abscheiders (20) montiert ist und mit Hochdruckwasser aus einer Wasserreserve (51) gespeist wird.

5. Einheit nach Anspruch 4, **dadurch gekennzeichnet, dass** sie einen Hydrozyklon (55) umfasst, der zur Entgasung des Hochdruckwassers aus dem Hydroinjektor (50) angepasst ist.

6. Einheit nach Anspruch 5, **dadurch gekennzeichnet, dass** sie eine Verdrängerpumpe (62) zum Fördern von entgastem Wasser zu der Wasserreserve (51) umfasst.

7. Einheit nach einem der Ansprüche 5 oder 6, **dadurch gekennzeichnet, dass** der Kreis zum Abführen der Gase eine Leitung (60) zum Abführen der von dem Hydrozyklon (55) erzeugten Gase zu einer markierten Abführzone (14a) umfasst.

8. Einheit nach einem der Ansprüche 1 bis 7, **dadurch gekennzeichnet, dass** sie ein Sicherheitsventil (46) umfasst, das in dem Speicherbehälter (11) untergebracht ist und in offener Stellung gehalten wird, um den Behälter (11) gegen die Gefahr von Überdruck zu schützen.

9. Einheit nach einem der Ansprüche 1 bis 8, **dadurch gekennzeichnet, dass** der Speicherbehälter (11) in einem Abstand von 50 bis 100 Metern von der Pumpzone (73) angeordnet ist.

10. Einheit nach einem der Ansprüche 1 bis 9, **dadurch gekennzeichnet, dass** sie von einem Hydro-Spülfahrzeug (68) getragen wird.

11. Verfahren zum Pumpen von brennbaren Produkten, welche eine explosive Atmosphäre bilden können, von einer Pumpzone zu einem Speicherbehälter, **dadurch gekennzeichnet, dass** es die Schritte umfasst, die aus bestehen aus einer:
- (101) Trennung der Produkte direkt in der Pumpzone mittels eines Produktabscheiders in eine flüssig/pastöse Phase und eine gasförmige Phase,
- (102) Evakuierung des Produktabscheiders, um das Ansaugen der Produkte aus der Pumpzone in Richtung des Abscheiders zu gewährleisten, ohne den Speicherbehälter zu evakuieren,
- (103) Förderung der nicht gasförmigen Produkte aus dem Abscheider in Richtung des Speicherbehälters mittels einer Verdrängerpumpe,
- (104) Ableitung der erzeugten Gase zu einer markierten Abführzone.

12. Pumpverfahren nach Anspruch 11, **dadurch gekennzeichnet, dass** der Schritt (102) des Evakuierens des Abscheiders darin besteht, eine Vakuumpumpe an den Abscheider anzuschließen, wobei diese Pumpe außerhalb der Pumpzone und des Speicherbehälters angeordnet ist.

13. Verfahren nach Anspruch 11, **dadurch gekennzeichnet, dass** der Schritt (102) des Evakuierens des Abscheiders darin besteht, Hochdruckwasser aus einer Wasserreserve in einen auf dem Abscheider montierten Hydroinjektor einzuspritzen.

14. Verfahren nach Anspruch 13, **dadurch gekennzeichnet, dass** das Verfahren einen Schritt des Speisens eines Hydrozyklons mit dem entgasten Hochdruckwasser und einen Schritt des Abführens dieses Wassers zu der Wasserreserve umfasst.

## Claims

1. Unit for pumping flammable products, which can form an explosive atmosphere, from a pumping region (73) to a storage chamber (11),
**characterised in that** it comprises:
- a separator (20) for separating said products into a liquid/pasty phase and a gaseous phase, comprising a cyclonic vessel (21), a product inlet mouth (22), a delivery outlet (23) for non-gaseous products, and a suction opening (24), said separator (20) being suitable for being arranged in said pumping region (73),
- a volumetric pump (30) for delivering non-gaseous products to said storage chamber (11), said pump (30) being connected to said product delivery outlet (23) of said product separator (20),
- means for evacuating said cyclonic vessel (21) of said product separator (20), which means are suitable for ensuring suction of the products from said pumping region (73) to said separator (20) without evacuating said storage chamber (11),
- a circuit for discharging gases produced by said unit to at least one marked discharge region (14a).

2. Unit according to claim 1, **characterised in that** said means for evacuating said separator (20) comprise a vacuum pump (35) which is arranged outside said pumping region (73) and the storage chamber (11) and is connected to said suction opening (24) of said separator (20).

3. Unit according to claim 2, **characterised in that** said gas discharge circuit comprises a channel (36a, 36b) for discharging gases produced by said separator (20), which channel is connected to said suction opening (24) of said separator (20), said vacuum pump (35) being arranged on this channel (36a, 36b) such that this channel (36a, 36b) contributes both to evacuating said cyclonic vessel (21) and to transferring the gases produced by the separator (20) to a marked discharge region (14a).

4. Unit according to claim 1, **characterised in that** said means for evacuating said product separator (20) comprise a hydro injector (50) which is mounted on said suction opening (24) of said separator (20) and is supplied with high-pressure water from a water store (51).

5. Unit according to claim 4, **characterised in that** it comprises a hydrocyclone (55) capable of degassing the high-pressure water coming from said hydro injector (50).

6. Unit according to claim 5, **characterised in that** it comprises a volumetric pump (62) for delivering degassed water to said water store (51).

7. Unit according to either claim 5 or claim 6, **characterised in that** said gas discharge circuit comprises a channel (60) for discharging gases produced by said hydrocyclone (55) to a marked discharge region (14a).

8. Unit according to any of claims 1 to 7, **characterised in that** it comprises a safety valve (46) which is arranged in said storage chamber (11) and is kept in the open position in order to protect the chamber (11) from risks of excess pressure.

9. Unit according to any of claims 1 to 8, **characterised in that** said storage chamber (11) is arranged at a distance of between 50 and 100 metres from the pumping region (73).

10. Unit according to any of claims 1 to 9, **characterised in that** it is carried by a hydrotreating combine (68).

11. Method for pumping flammable products, which can produce an explosive atmosphere, from a pumping region to a storage chamber,
**characterised in that** it comprises the steps consisting in:
- (101) separating the products directly in said pumping region, by means of a separator for separating products into a liquid/pasty phase and a gaseous phase,
- (102) evacuating said product separator in order to ensure suction of the products from said pumping region to said separator without evacuating said storage chamber,
- (103) delivering the non-gaseous products from the separator to said storage chamber by means of a volumetric delivery pump,
- (104) conveying the gases produced to a marked discharge region.

12. Pumping method according to claim 11, **characterised in that** step (102) of evacuating the separator consists in connecting a vacuum pump to the separator, said pump being arranged outside the pumping region and the storage chamber.

13. Pumping method according to claim 11, **characterised in that** step (102) of evacuating said separator consists in injecting high-pressure water from a water store into a hydro injector mounted on said separator.

14. Pumping method according to claim 13, **characterised in that** it comprises a step of supplying a hydrocyclone with degassed high-pressure water, and a step of delivering said water to said water store.
